# EUROPEAN PATENT APPLICATION

(11) **EP 4 685 973 A1**
(43) Date of publication of application: **28.01.2026**
(21) Application number: 23944205.6
(22) Date of filing: 28.11.2023
(51) Int. Cl.: H01M 50/449

(54) **SEPARATOR, PREPARATION METHOD, SECONDARY BATTERY, AND ELECTRICAL APPARATUS**

(30) Priority: 06.07.2023 CN 202310826484
(71) Applicant: Contemporary Amperex Technology Co., Limited, Ningde, Fujian 352100 (CN)
(72) Inventor: LI, Quan, Ningde, Fujian 352100 (CN); YANG, Jianrui, Ningde, Fujian 352100 (CN); SUN, Chengdong, Ningde, Fujian 352100 (CN); OUYANG, Chuying, Ningde, Fujian 352100 (CN); HUANG, Siying, Ningde, Fujian 352100 (CN); WANG, Yaohui, Ningde, Fujian 352100 (CN)
(74) Representative: Lorenz Seidler Gossel Part. mbB
(86) International application number: PCT/CN2023/134840
(87) International publication number: WO 2025/007484

(57) **Abstract**

The present application provides a separator, a preparation method, a secondary battery, and an electric device. The separator includes a first porous base film, where the first porous base film is polyolefin, and a viscosity-average molecular weight of the first porous base film is greater than or equal to 1,200,000 g/mol, such that the separator has higher puncture strength; a degree of branching of the first porous base film is less than or equal to 5%, molecular chain sequences in the first porous base film are easy to form ordered arrangement, and thus the regularity of the molecular chains is enhanced, thereby further improving the puncture strength of the separator. Therefore, the separator provided by the present application can reduce the risk that the separator is punctured by metal dendrites, prolong the cycle life of the secondary battery, and improve the reliability of the secondary battery.

## Description

The present application claims priority to Chinese Patent Application No. 2023108264844 entitled "SEPARATOR, PREPARATION METHOD, SECONDARY BATTERY, AND ELECTRIC DEVICE" filed on July 06, 2023, which is incorporated herein by reference in its entirety.

### TECHNICAL FIELD

The present application belongs to the technical field of secondary batteries, and particularly relates to a separator, a preparation method, a secondary battery, and an electric device.

### BACKGROUND

The secondary batteries have the outstanding characteristics of light weight, no pollution and negligible memory effect, and thus are widely applied to various consumer electronic products and electric vehicles. With the continuous development of new energy industries, users put higher use demands on the reliability of secondary batteries.

Therefore, how to make the secondary batteries have better reliability is a problem to be solved urgently.

### SUMMARY

In view of the technical problems in the background art, the present application provides a separator, a preparation method, a secondary battery, and an electric device, aiming to improve the reliability of the secondary battery.

In order to achieve the above objective, a first aspect of the present application provides a separator including a first porous base film, where the first porous base film is polyolefin, a viscosity-average molecular weight of the first porous base film is greater than or equal to 1,200,000 g/mol, and a degree of branching of the first porous base film is less than or equal to 5%.

Compared with the prior art, the present application at least includes the following beneficial effects: In the separator provided by the present application, the first porous base film is polyolefin, and the viscosity-average molecular weight of the first porous base film is greater than or equal to 1,200,000 g/mol, such that the separator has higher puncture strength; because the degree of branching of the first porous base film is less than or equal to 5%, the molecular chain sequences in the first porous base film are easy to form ordered arrangement, and thus the regularity of the molecular chains is enhanced, thereby further improving the puncture strength of the separator. Therefore, the separator provided by the present application can reduce the risk that the separator is punctured by metal dendrites, prolong the cycle life of the secondary battery, and improve the reliability of the secondary battery.

In any embodiment of the present application, the viscosity-average molecular weight of the first porous base film is greater than or equal to 1,500,000 g/mol, and optionally 2,000,000 g/mol to 3,000,000 g/mol, such that the separator has higher puncture strength, and can reduce the risk that the separator is punctured by metal dendrites, prolong the cycle life of the secondary battery, and improve the reliability of the secondary battery.

In any embodiment of the present application, the degree of branching of the first porous base film is less than or equal to 2%, and optionally less than or equal to 1%, such that the molecular chain sequences in the first porous base film are easy to form ordered arrangement, and thus the regularity of the molecular chains is enhanced, thereby further improving the puncture strength of the separator. Therefore, the risk that the separator is punctured by metal dendrites can be reduced, the cycle life of the secondary battery is prolonged, and the reliability of the secondary battery is improved.

In any embodiment of the present application, a degree of polymerization of the first porous base film is greater than or equal to 50,000, and optionally 80,000 to 200,000, such that the separator has higher puncture strength, can reduce the risk that the separator is punctured by metal dendrites, prolong the cycle life of the secondary battery, and improve the reliability of the secondary battery.

In any embodiment of the present application, a crystallinity of the first porous base film is 40% to 90%, and optionally 75% to 85%, such that the separator has higher puncture strength, and can reduce the risk that the separator is punctured by metal dendrites, prolong the cycle life of the secondary battery, and improve the reliability of the secondary battery.

In any embodiment of the present application, a puncture strength of the first porous base film is greater than or equal to 300 gf, and optionally 350 gf to 450 gf, such that the risk that the separator is punctured by metal dendrites can be reduced, the cycle life of the secondary battery is prolonged, and the reliability of the secondary battery is improved.

In any embodiment of the present application, the thickness of the first porous base film is 1 µm to 12 µm, and optionally 3 µm to 6 µm, such that the risk that the separator is punctured by metal dendrites can be reduced, the cycle life of the secondary battery is prolonged, and the reliability of the secondary battery is improved.

In any embodiment of the present application, a porosity of the first porous base film is 20% to 50%, and optionally 30% to 40%, such that the risk that the separator is punctured by metal dendrites can be reduced, the cycle life of the secondary battery is prolonged, and the reliability of the secondary battery is improved.

In any embodiment of the present application, an air permeability of the first porous base film is 100 sec/100 cc to 300 sec/100 cc, and optionally 200 sec/100 cc to 300 sec/100 cc, which allows the separator to have a good ion passage rate.

In any embodiment of the present application, a number-average molecular weight of the first porous base film is greater than or equal to 1,400,000, and optionally 1,600,000 to 2,400,000, such that the separator has higher puncture strength, prolongs the cycle life of the secondary battery, and improves the reliability of the secondary battery.

In any embodiment of the present application, a weight-average molecular weight of the first porous base film is greater than or equal to 1,000,000 g/mol, and optionally 1,200,000 g/mol to 2,000,000 g/mol, such that the separator has higher puncture strength, prolongs the cycle life of the secondary battery, and improves the reliability of the secondary battery.

In any embodiment of the present application, the separator further includes a porous coating, the porous coating being disposed on at least one surface of the first porous base film, and the porous coating including a binder; optionally, the porous coating includes a binder and filler particles.

Disposing the porous coating on the first porous base film can improve the heat resistance and the puncture strength of the separator, prolong the cycle life of the secondary battery, and improve the reliability of the secondary battery.

In any embodiment of the present application, the separator further includes a porous coating and a second porous base film, the porous coating being located between the first porous base film and the second porous base film; optionally, the porous coating includes a binder; more optionally, the porous coating includes a binder and filler particles.

When the porous coating is disposed between the first porous base film and the second porous base film, the process defects of the base film in the hot pressing and lamination process can be compensated, and meanwhile, the stability of the physical properties of the separator can be further improved, thereby improving the reliability of the secondary battery.

In any embodiment of the present application, the binder includes one or several of polyacrylate, polyacrylic acid, polytetrafluoroethylene, polyvinylidene fluoride, a vinylidene fluoride-trichloroethylene copolymer, polyvinylpyrrolidone, polyvinyl acetate, an ethylene-vinyl acetate copolymer, polyethylene oxide, polyarylate, carboxymethylcellulose, hydroxypropylcellulose, regenerated cellulose, cellulose acetate, cellulose acetate propionate, cellulose acetate butyrate, polyacrylonitrile, polyvinylalcohol, polyethylene, polypropylene, starch, andcyanoethyl branched starch; and/or the filler particles include at least one of inorganic particles, organic particles, and organo-metallic framework materials.

When the binder and/or the filler particles in the porous coating include the above components, the reliability of the secondary battery can be improved.

In any embodiment of the present application, the viscosity-average molecular weight of the first porous base film is greater than a viscosity-average molecular weight of the second porous base film; optionally, the viscosity-average molecular weight of the second porous base film is 100,000 g/mol to 2,000,000 g/mol, and more optionally 300,000 g/mol to 800,000 g/mol.

When the viscosity-average molecular weight of the second porous base film is within the above range, the stability of the physical properties of the separator can be improved, thereby improving the reliability of the secondary battery.

In any embodiment of the present application, the degree of branching of the first porous base film is less than a degree of branching of the second porous base film; optionally, the degree of branching of the second porous base film is less than or equal to 90%, and more optionally 10% to 40%.

When the degree of branching of the second porous base film is within the above range, the stability of the physical properties of the separator can be improved, thereby improving the reliability of the secondary battery.

In any embodiment of the present application, the degree of polymerization of the first porous base film is greater than a degree of polymerization of the second porous base film; optionally, the degree of polymerization of the second porous base film is less than or equal to 8000, and more optionally 400 to 1000.

When the degree of polymerization of the second porous base film is within the above range, the stability of the physical properties of the separator can be improved, thereby improving the reliability of the secondary battery.

In any embodiment of the present application, a melting point of the first porous base film is lower than a melting point of the second porous base film; optionally, the melting point of the second porous base film is 160 °C to 350 °C, and more optionally 170 °C to 320 °C.

When the melting points of the first porous base film and the second porous base film are within the above ranges, the heat resistance and the puncture strength of the separator are improved, thereby improving the reliability of the secondary battery.

In any embodiment of the present application, the crystallinity of the first porous base film is greater than a crystallinity of the second porous base film; optionally, the crystallinity of the second porous base film is 20% to 70%, and more optionally 30% to 45%.

In any embodiment of the present application, the puncture strength of the first porous base film is greater than a puncture strength of the second porous base film; optionally, a ratio of the puncture strength of the first porous base film to the puncture strength of the second porous base film is greater than or equal to 2.5; optionally, the puncture strength of the second porous base film is greater than or equal to 70 gf, and more optionally 100 gf to 300 gf.

In any embodiment of the present application, the second porous base film includes at least one of polyolefin, polytetrafluoroethylene, polyvinyl fluoride, polyethylene terephthalate, polyimide, and polyetheretherketone.

In any embodiment of the present application, the separator satisfies at least one of the following (1) to (4):
(1) a transverse direction elongation at break of the separator is greater than or equal to 80%, optionally greater than or equal to 100%, and more optionally 100% to 300%;
(2) a machine direction elongation at break of the separator is greater than or equal to 40%, optionally greater than or equal to 60%, and more optionally 60% to 200%;
(3) a transverse direction tensile strength of the separator is greater than or equal to 1500 kgf/cm², optionally greater than or equal to 2000 kgf/cm², and more optionally 2000 kgf/cm² to 4000 kgf/cm²; and
(4) a machine direction tensile strength of the separator is greater than or equal to 1500 kgf/cm², optionally greater than or equal to 2000 kgf/cm², and more optionally 2000 kgf/cm² to 4000 kgf/cm².

When the separator satisfies the above range in at least one of (1) to (4), the separator is made to have good puncture strength, thereby improving the reliability of the secondary battery.

A second aspect of the present application provides a method for preparing the separator as described above, which includes:
providing a polymer powder;
mixing the polymer powder with lubricating oil, an antioxidant, and a crosslinking agent to obtain a mixture, and melting the mixture to obtain a melt; and
casting and stretching the melt, and extracting the lubricating oil to obtain the first porous base film, the separator including the first porous base film;
where the first porous base film is polyolefin, the viscosity-average molecular weight of the first porous base film is greater than or equal to 1,200,000 g/mol, and the degree of branching of the first porous base film is less than or equal to 5%.

When the method for preparing the separator provided by the present application is adopted, the separator provided by the present application can be prepared, the risk that the separator is punctured by metal dendrites can be reduced, the cycle life of the secondary battery is prolonged, and the reliability of the secondary battery is improved.

In any embodiment of the present application, the preparation method satisfies at least one of the following (1) to (4):
(1) a mass fraction of the polymer powder in the mixture is 5% to 40%, and optionally 20% to 35%;
(2) a mass fraction of the lubricating oil in the mixture is 50% to 90%, and optionally 60% to 75%;
(3) a mass fraction of the antioxidant in the polymer powder is 0.3% to 1.0%, and optionally 0.5% to 1.0%; and
(4) a mass fraction of the crosslinking agent in the polymer powder is 3% to 10%, and optionally 3% to 5%.

When the polymer powder, the lubricating oil, the antioxidant, and the crosslinking agent are within the above ranges, the prepared separator has good puncture strength.

In any embodiment of the present application, the preparation method satisfies at least one of the following (1) to (3):

the polymer powder includes a polyolefin powder; the lubricating oil includes white oil and/or mineral oil; the antioxidant includes at least one of 4,4-thiobis(6-tert-butyl-m-cresol), dibutylhydroxytoluene, phosphite esters, tert-butylhydroquinone, n-octadecyl β-(3,5-di-tert-butyl-4-hydroxyphenyl)propionate, 1,1,3-tris(2-methyl-4-hydroxy-5-tert-butylphenyl)butane, 2-tert-butyl-6-methylphenol, N,N'-di-β-naphthyl-p-phenylenediamine, dilauryl thiodipropionate, tris(nonylphenyl)phosphite, and triphenyl phosphite; the crosslinking agent includes a compound containing at least two unsaturated groups;
the polymer powder has a viscosity-average molecular weight of greater than or equal to 1,200,000 g/mol and a degree of branching of less than or equal to 5%; and
in the step of melting the mixture to obtain the melt, the mixture is mixed and melted within a temperature range of 160°C to 250 °C, and optionally 190 °C to 230 °C.

When the polymer powder, the lubricating oil, the antioxidant, the crosslinking agent, and the melting temperature are within the above ranges, the prepared separator has good puncture strength.

A third aspect of the present application provides a secondary battery including the separator according to any of the above aspects. When the secondary battery adopts the separator provided by the present application, the reliability of the secondary battery can be improved.

In any embodiment of the present application, the secondary battery further includes a positive electrode plate and a negative electrode plate, the separator is disposed between the positive electrode plate and the negative electrode plate, and the first porous base film faces the negative electrode plate. When the secondary battery adopts the separator provided by the present application, the risk that the separator is punctured by metal dendrites can be reduced, the cycle life of the secondary battery is prolonged, and the reliability of the secondary battery is improved.

A fourth aspect of the present application provides an electric device, which includes the secondary battery according to the second aspect of the present application. When the secondary battery of the electric device adopts the separator provided by the present application, the reliability of the electric device can be improved.

The electric device of the present application includes the secondary battery according to the present application and thus has at least the same advantages as the secondary battery.

### BRIEF DESCRIPTION OF THE DRAWINGS

To more clearly illustrate the technical solutions in embodiments of the present application, the drawings required for illustrating the embodiments are briefly described below. Apparently, the drawings in the following description illustrate merely some embodiments of the present application, and those of ordinary skill in the art may still derive other drawings from these drawings without creative efforts.
FIG. 1 is a schematic structural diagram of one embodiment of a separator of the present application.
FIG. 2 is a schematic structural diagram of another embodiment of the separator of the present application.
FIG. 3 is a schematic structural diagram of yet another embodiment of the separator of the present application.
FIG. 4 is a schematic diagram of one embodiment of a secondary battery.
FIG. 5 is an exploded view of FIG. 4.
FIG. 6 is a schematic diagram of one embodiment of a battery module.
FIG. 7 is a schematic diagram of one embodiment of a battery pack.
FIG. 8 is an exploded view of FIG. 7.
FIG. 9 is a schematic diagram of one embodiment of a device in which a secondary battery is used as a power source.

### DETAILED DESCRIPTION

The present application will be further described with reference to the following embodiments. It should be understood that these embodiments are merely illustrative of the present application and are not intended to limit the scope of the present application.

For the sake of brevity, only some numerical ranges are specifically disclosed herein. However, any lower limit may be combined with any upper limit to form ranges not explicitly recited; and any lower limit may be combined with any other lower limit to form a range not explicitly recited, and any upper limit may be combined with any other upper limit to form a range not explicitly recited. Further, each separately disclosed point or individual numerical value may itself, as a lower limit or upper limit, be combined with any other point or individual numerical value or with other lower limit or upper limit to form a range not explicitly recited.

In the description herein, the term "or" is inclusive, unless otherwise specified. That is, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

In the description herein, it should be noted that, unless otherwise specified, "above" and "below" are inclusive, and "several" in "one or several" means two or more.

Unless otherwise specified, the terms used in the present application have well-known meanings that are commonly understood by those skilled in the art. Unless otherwise specified, the numerical values of the parameters mentioned in the present application can be measured by various test methods commonly used in the art. For example, they can be measured according to the test methods given in the embodiments of the present application.

### Secondary battery

Secondary batteries refer to batteries that can continue to be used by reactivating their active materials through charging after discharging.

Typically, a secondary battery includes a positive electrode plate, a negative electrode plate, a separator, and an electrolyte. During the charging and discharging process of the battery, active ions are intercalated and deintercalated back and forth between the positive electrode plate and the negative electrode plate. The separator is disposed between the positive electrode plate and the negative electrode plate for isolation. The electrolyte conducts ions between the positive electrode plate and the negative electrode plate.

### [Separator]

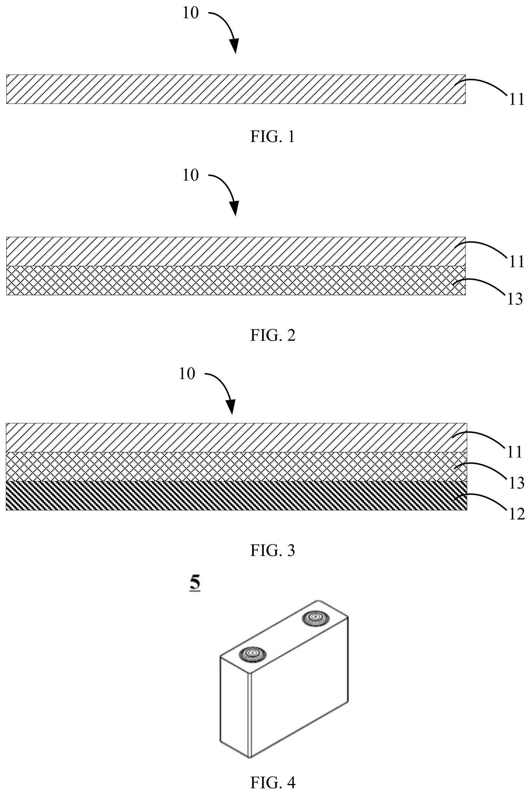

Referring to FIG. 1, referring to FIG. 1, an embodiment of the present application provides a separator 10 including a first porous base film 11, where the first porous base film 11 is polyolefin, a viscosity-average molecular weight of the first porous base film 11 is greater than or equal to 1,200,000 g/mol, and a degree of branching thereof is less than or equal to 5%.

In some embodiments, the viscosity-average molecular weight of the first porous base film 11 may be 1,200,000 g/mol, 1,500,000 g/mol, 1,800,000 g/mol, 2,000,000 g/mol, 2,100,000 g/mol, 2,200,000 g/mol, 2,500,000 g/mol, 2,700,000 g/mol, 2,750,000 g/mol, 2,800,000 g/mol, 3,000,000 g/mol, 3,100,000 g/mol, 3,200,000 g/mol, 3,500,000 g/mol, or the like, or a range composed of any two of the above numerical values, for example, may be 1,200,000 g/mol to 3,200,000 g/mol, 1,500,000 g/mol to 1,800,000 g/mol, 2,000,000 g/mol to 3,000,000 g/mol, 2,000,000 g/mol to 2,200,000 g/mol, 2,500,000 g/mol to 2,800,000 g/mol, or 3,000,000 g/mol to 3,500,000 g/mol, or a range greater than or equal to the above numerical values, and for example, may be greater than or equal to 1,200,000 g/mol, greater than or equal to 1,500,000 g/mol, greater than or equal to 1,800,000 g/mol, greater than or equal to 2,000,000 g/mol, greater than or equal to 2,500,000 g/mol, greater than or equal to 2,800,000 g/mol, greater than or equal to 3,000,000 g/mol, greater than or equal to 3,500,000 g/mol, or the like.

The viscosity-average molecular weight of the base film has a meaning well known in the art and can be measured using equipment and methods known in the art. For example, the test is carried out by using a viscosity method.

In some embodiments, the degree of branching of the first porous base film 11 is 5%, 4.8%, 4.5%, 4.3%, 4%, 3.93%, 3.55%, 3%, 2.36%, 2%, 1.675%, 1.5%, 1.35%, 1.3%, 1.2%, 1.1%, 1.05%, 1%, 0.9%, 0.8%, 0.7%, 0.6%, 0.5%, 0.45%, 0.4%, 0.3%, 0.2%, 0.1%, 0.05%, 0.01%, 0.001%, or the like, or a range composed of any two of the above numerical values, for example, may be 5% to 4.5%, 4.5% to 3%, 2.36% to 1.675%, 1.5% to 1.2%, 1.5% to 1%, 0.9% to 0.5%, 0.6% to 0.3%, 0.2% to 0.001%, or a range less than or equal to the above numerical values, and for example, may be less than or equal to 5%, less than or equal to 4.8%, less than or equal to 4.5%, less than or equal to 2%, less than or equal to 1.5%, less than or equal to 1.1%, less than or equal to 1%, less than or equal to 0.7%, less than or equal to 0.5%, less than or equal to 0.2%, less than or equal to 0.001%, or the like.

The degree of branching of the base film has a meaning well known in the art and can be measured using equipment and methods known in the art. For example, the test is carried out by infrared spectroscopy. Specifically, the following operations may be performed: 3-5 groups of base film samples are selected, and the samples are placed in an infrared spectrometer for scanning, where the scanning range is 400 cm⁻¹ to 4000 cm⁻¹. After the scanning is completed, the infrared curves of the samples are processed, and the ratio of the peak area at 1377 cm⁻¹ to the peak area at 1996-2062 cm⁻¹ is calculated as the degree of branching.

In the specific separator of the present application, the first porous base film 11 is polyolefin, and the viscosity-average molecular weight of the first porous base film 11 is greater than or equal to 1,200,000 g/mol, such that the separator has higher puncture strength; as the degree of branching of the first porous base film 11 is less than or equal to 5%, molecular chain sequences in the first porous base film 11 are easy to form ordered arrangement, and thus the regularity of the molecular chains is enhanced, thereby further improving the puncture strength of the separator. Therefore, the separator provided by the present application can reduce the risk that the separator is punctured by metal dendrites, prolong the cycle life of the secondary battery, and improve the reliability of the secondary battery.

In any embodiment of the present application, the viscosity-average molecular weight of the first porous base film 11 is greater than or equal to 1,500,000 g/mol, and optionally 2,000,000 g/mol to 3,000,000 g/mol, such that the separator has higher puncture strength, and can reduce the risk that the separator is punctured by metal dendrites, prolong the cycle life of the secondary battery, and improve the reliability of the secondary battery.

In any embodiment of the present application, the degree of branching of the first porous base film 11 is less than or equal to 2%, and optionally less than or equal to 1%, such that the molecular chain sequences in the first porous base film 11 are easy to form ordered arrangement, and thus the regularity of the molecular chains is enhanced, thereby further improving the puncture strength of the separator. Therefore, the risk that the separator is punctured by metal dendrites can be reduced, the cycle life of the secondary battery is prolonged, and the reliability of the secondary battery is improved.

In any embodiment of the present application, a degree of polymerization of the first porous base film 11 is greater than or equal to 50,000, and optionally 80,000 to 200,000.

In some embodiments, the degree of polymerization of the first porous base film 11 may be 50,000, 60,000, 75,000, 80,000, 90,000, 100,000, 110,000, 120,000, 150,000, 180,000, 200,000, 210,000, 250,000, 280,000, 300,000, 400,000, 500,000, or the like, or a range composed of any two of the above numerical values, for example, may be 50,000 to 75,000, 60,000 to 90,000, 80,000 to 120,000, 180,000 to 180,000, 200,000 to 210,000, 80,000 to 200,000, 280,000 to 300,000, 80,000 to 500,000, or the like, or a range greater than or equal to the above numerical values, for example, may be greater than or equal to 50,000, greater than or equal to 80,000, greater than or equal to 110,000, greater than or equal to 120,000, greater than or equal to 150,000, greater than or equal to 200,000, greater than or equal to 250,000, greater than or equal to 300,000, greater than or equal to 500,000, or the like.

In any embodiment of the present application, the degree of polymerization of the first porous base film 11 is limited, such that the separator has higher puncture strength, and can reduce the risk that the separator is punctured by metal dendrites, prolong the cycle life of the secondary battery, and improve the reliability of the secondary battery.

The degree of polymerization of the base film has a meaning well known in the art and can be measured using equipment and methods known in the art. For example, the degree of polymerization may be calculated based on the molecular weight of the material, which is denoted as m, the relative molecular mass of the individual segments is denoted as m0, and the degree of polymerization n = m/m0.

In any embodiment of the present application, a crystallinity of the first porous base film 11 is 40% to 90%, and optionally 75% to 85%.

In some embodiments, the crystallinity of the first porous base film 11 may be 40%, 45%, 48%, 50%, 55%, 60%, 68%, 70%, 75%, 77.5%, 80%, 85%, 90%, or the like, or a range composed of any two of the above numerical values, for example, may be 40% to 48%, 45% to 50%, 55% to 70%, 75% to 85%, 60% to 80%, 75% to 90%, or the like.

In any embodiment of the present application, the crystallinity of the first porous base film 11 is limited, such that the separator has higher puncture strength, and can reduce the risk that the separator is punctured by metal dendrites, prolong the cycle life of the secondary battery, and improve the reliability of the secondary battery.

The crystallinity of the base film can be measured using equipment and methods known in the art. The method is specifically as follows: 4 mg-6 mg of a sample to be tested is taken and placed in a sample chamber of a differential scanning calorimeter, the sample is heated from 25 °C to 350 °C at a heating rate of 10 °C/min to obtain a melting endothermic curve, and the reference value of the curve peak area and 100% crystalline polyolefin is calculated to obtain the crystallinity.

The crystallinity represents the proportion of the crystalline region in the material of the base film. Crystallization is an ordered arrangement of molecular chains, forming a molecular chain form. Generally, the higher the crystallinity, the more regular the molecular chain arrangement.

In any embodiment of the present application, a puncture strength of the first porous base film 11 is greater than or equal to 300 gf, and optionally 350 gf to 450 gf.

In some embodiments, the puncture strength of the first porous base film 11 may be 300 gf, 310 gf, 320 gf, 340 gf, 345 gf, 350 gf, 380 gf, 390 gf, 400 gf, 410 gf, 430 gf, 435 gf, 450 gf, 470 gf, 480 gf, 490 gf, 500 gf, or the like, or a range composed of any two of the above numerical values, for example, may be 300 gf to 340 gf, 310 gf to 435 gf, 350 gf to 480 gf, 350 gf to 450 gf, 400 gf to 430 gf, 470 gf to 500 gf, or the like, or a range greater than or equal to the above numerical values, and for example, may be greater than or equal to 300 gf, greater than or equal to 350 gf, greater than or equal to 400 gf, greater than or equal to 410 gf, greater than or equal to 435 gf, greater than or equal to 450 gf, greater than or equal to 500 gf, or the like.

In any embodiment of the present application, the puncture strength of the first porous base film 11 is limited, such that the risk that the separator is punctured by metal dendrites can be reduced, the cycle life of the secondary battery can be prolonged, and the reliability of the secondary battery can be improved.

The puncture strength of the base film has the meaning well known in the art and can be measured using equipment and methods known in the art. For example, the puncture strength may be tested in accordance with the standard: GB/T 10004-2008. Specifically, the sample to be tested may be cut into strips, where the width of the strip samples is 100 mm. Test pieces with the width of 100 mm are mounted on a sample film fixing clamp ring, then a steel needle with a diameter of 1.0 mm and a radius of the tip of the diameter of 0.5 mm is used for thrusting the test pieces at a speed of (50±5) mm/min, and the maximum load of the steel needle penetrating the test pieces is read. Usually, 5 parallel test samples are taken simultaneously, 3 points are measured for each test sample, and the arithmetic mean value is taken as the final puncture strength.

In any embodiment of the present application, the thickness of the first porous base film 11 is 1 µm to 12 µm, and optionally 3 µm to 6 µm.

In some embodiments, the thickness of the first porous base film 11 may be 1 µm, 1.2 µm, 1.6 µm, 2 µm, 2.8 µm, 3 µm, 4 µm, 5 µm, 5.6 µm, 6 µm, 6.345 µm, 7 µm, 8 µm, 9 µm, 9.6 µm, 10 µm, 10.5 µm, 11 µm, 11.5 µm, 12 µm, or the like, or a range composed of any two of the above numerical values, and for example, may be 1 µm to 1.2 µm, 1.6 µm to 4 µm, 3 µm to 6 µm, 5 µm to 5.6 µm, 8 µm to 11.5 µm, 6 µm to 9.6 µm, 10 µm to 12 µm, or the like.

In any embodiment of the present application, the thickness of the first porous base film 11 is limited, such that the risk that the separator is punctured by metal dendrites can be reduced, the cycle life of the secondary battery can be prolonged, and the reliability of the secondary battery can be improved.

The thickness of the base film can be measured using equipment and methods known in the art. The thickness of the base film is measured using, for example, a thickness gauge. Specifically, the following method may be employed: six groups of parallel samples are taken, the thickness of each group of samples at different positions is measured by using a micrometer, at least 20 points of each group of samples are measured, and the average value of the thicknesses of the six groups of samples is taken as the thickness of the base film.

In any embodiment of the present application, a porosity of the first porous base film 11 is 20% to 50%, and optionally 30% to 40%.

In some embodiments, the porosity of the first porous base film 11 may be 20%, 22%, 23.5%, 25%, 25.2%, 27.5%, 30%, 33%, 38.5%, 40%, 41%, 45%, 48%, 50%, or the like, or a range composed of any two of the above numerical values, and for example, may be 20% to 25%, 22% to 41%, 25.2% to 27.5%, 30% to 40%, 30% to 48%, 33% to 40%, 45% to 50%, or the like.

In any embodiment of the present application, the porosity of the first porous base film 11 is limited, such that the risk that the separator is punctured by metal dendrites can be reduced, the cycle life of the secondary battery can be prolonged, and the reliability of the secondary battery can be improved.

The porosity of the base film has a meaning well known in the art and can be measured using equipment and methods known in the art. For example, the porosity of the base film may be measured using a mercury porosimeter, with reference to GB/T 21650.1-2008.

In any embodiment of the present application, an air permeability of the first porous base film 11 is 100 sec/100 cc to 300 sec/100 cc, and optionally 200 sec/100 cc to 300 sec/100 cc, which allows the separator to have a good ion passage rate.

In any embodiment of the present application, a number-average molecular weight of the first porous base film 11 is greater than or equal to 1,400,000, and optionally 1,600,000 to 2,400,000.

In some embodiments, the number-average molecular weight of the first porous base film 11 may be 1,400,000, 1,500,000, 1,600,000, 1,800,000, 2,000,000, 2,150,000, 2,400,000, 2,500,000, 2,800,000, 3,000,000, 3,400,000, 3,800,000, or the like, or a range composed of any two of the above numerical values, for example, 1,400,000 to 2,500,000, 1,500,000 to 2,000,000, 1,600,000 to 2,400,000, 2,150,000 to 2,800,000, 1,800,000 to 3,000,000, 3,400,000 to 3,800,000, or the like, or a range greater than or equal to the above numerical values, and for example, may be greater than or equal to 1,400,000, greater than or equal to 1,800,000, greater than or equal to 2,500,000, greater than or equal to 3,000,000, greater than or equal to 3,800,000, or the like.

In any embodiment of the present application, the number-average molecular weight of the first porous base film 11 is limited, such that the separator has higher puncture strength, the cycle life of the secondary battery is prolonged, and the reliability of the secondary battery is improved.

In any embodiment of the present application, a weight-average molecular weight of the first porous base film is greater than or equal to 1,000,000 g/mol, and optionally 1,200,000 g/mol to 2,000,000 g/mol, such that the separator has higher puncture strength, prolongs the cycle life of the secondary battery, and improves the reliability of the secondary battery.

In some embodiments, the weight-average molecular weight of the first porous base film 11 may be 1,000,000 g/mol, 1,200,000 g/mol, 1,500,000 g/mol, 1,700,000 g/mol, 2,000,000 g/mol, 2,200,000 g/mol, 2,500,000 g/mol, 2,750,000 g/mol, 3,000,000 g/mol, 4,000,000 g/mol, or the like, or a range composed of any two of the above numerical values, for example, may be 1,000,000 g/mol to 2,200,000 g/mol, 1,200,000 g/mol to 2,000,000 g/mol, 1,500,000 g/mol to 2,500,000 g/mol, 2,000,000 g/mol to 4,000,000 g/mol, or the like, or a range greater than or equal to the above numerical values, and for example, may be greater than or equal to 1,000,000 g/mol, greater than or equal to 1,700,000 g/mol, greater than or equal to 2,000,000 g/mol, greater than or equal to 2,500,000 g/mol, greater than or equal to 3,000,000 g/mol, greater than or equal to 4,000,000 g/mol, or the like.

In any embodiment of the present application, the weight-average molecular weight of the first porous base film 11 is limited, such that the separator has higher puncture strength, prolongs the cycle life of the secondary battery, and improves the reliability of the secondary battery.

Referring to FIG. 2, in any embodiment of the present application, the separator further includes a porous coating 13, the porous coating 13 being disposed on at least one surface of the first porous base film 11, and the porous coating 13 including a binder; optionally, the porous coating 13 includes a binder and filler particles.

Disposing the porous coating 13 on the first porous base film 11 can improve the heat resistance and the puncture strength of the separator, prolong the cycle life of the secondary battery, and improve the reliability of the secondary battery.

Referring to FIG. 3, in any embodiment of the present application, the separator further includes a porous coating 13 and a second porous base film 12, the porous coating 13 being located between the first porous base film 11 and the second porous base film 12; optionally, the porous coating 13 includes a binder; more optionally, the porous coating 13 includes a binder and filler particles.

The first porous base film 11 and the second porous base film 12 can be directly laminated by hot pressing, and if the temperature is too high during the hot pressing and lamination process, the porosity is low and the air permeability is poor; and if the temperature is too low, the first porous base film 11 and the second porous base film 12 are not firmly bonded. Therefore, it is necessary to adjust the hot pressing temperature appropriately. Optionally, the hot pressing temperature is 20 °C to 50 °C.

When the porous coating 13 is disposed between the first porous base film 11 and the second porous base film 12, the process defects of the base film in the hot pressing and lamination process can be compensated, and meanwhile, the stability of the physical properties of the separator can be further improved, thereby improving the reliability of the secondary battery.

In some embodiments, the filler particles include at least one of inorganic particles, organic particles, and organo-metallic framework materials.

Optionally, the inorganic particles include one or more of inorganic particles having a dielectric constant of 5 or more, inorganic particles having ion conductivity but not storing ions, and inorganic particles capable of undergoing electrochemical reactions.

Optionally, the inorganic particles having a dielectric constant of 5 or more may include at least one of boehmite, alumina, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃ (abbreviated as PZT), Pb₁₋ₘLaₘZr₁₋ₙTiₙO₃ (abbreviated as PLZT, 0 < m < 1, and 0 < n < 1), Pb(Mg₃Nb_{2/3})O₃-PbTiO₃ (abbreviated as PMN-PT), and respective modified compounds thereof. Optionally, the manner of modification of the respective inorganic particles may be chemical modification and/or physical modification. Chemical modification includes coupling agent modification (such as using a silane coupling agent, a titanate coupling agent, etc.), surfactant modification, polymer grafting modification, etc. Physical modification includes mechanical dispersion, ultrasonic dispersion, high energy treatment, etc. The agglomeration of inorganic particles can be reduced by the modification treatment, thereby enabling the adhesive layer to have a more stable and uniform structure; in addition, by selecting a coupling agent, a surfactant, or a polymer having a specific functional group to modify the inorganic particles, it is also helpful to improve wetting and holding characteristics of the adhesive layer to the electrolytic solution, and to improve adhesiveness of the adhesive layer to the first porous base film 11 and the second porous base film 12.

Optionally, the inorganic particles having ion conductivity but not storing ions may include at least one of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium phosphorus sulfide Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, where 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0 < x8 < 3, 0 < y8 < 3, and 0 < z4 < 7. This can further increase the ion conductivity of the separator.

Optionally, the inorganic particles capable of undergoing an electrochemical reaction may include at least one of a lithium transition metal oxide, a lithium-containing phosphate, a carbon-based material, a silicon-based material, a tin-based material, and a lithium titanium compound.

Optionally, the organic particles may include one or more of polycarbonate, polythiophene, polypyridine, polystyrene, polyacrylate, polyethylene, polypropylene, cellulose, cellulose modifiers (e.g., carboxymethylscellulose), melamine resins, phenolic resins, polyesters (e.g., polyethylene terephthalate, polyethylene naphthalate, and polybutylene terephthalate), silicone resins, polyimides, polyamideimides, polyaramides, polyphenylene sulfides, polysulfones, polyether sulfones, polyetheretherketones, polyaryletherketones, and copolymers of butyl acrylate and ethyl methacrylate (e.g., cross-linked polymers of butyl acrylate and ethyl methacrylate).

Optionally, the organo-metallic framework materials may include one or more of a nitrogen-containing heterocyclic ligand building structure, an organic carboxylic ligand building structure, and a nitrogen-oxygen-containing mixed ligand building structure.

In any embodiment of the present application, the binder includes one or several of polyacrylate, polyacrylic acid, polytetrafluoroethylene, polyvinylidene fluoride, a vinylidene fluoride-trichloroethylene copolymer, polyvinylpyrrolidone, polyvinyl acetate, an ethylene-vinyl acetate copolymer, polyethylene oxide, polyarylate, carboxymethylcellulose, hydroxypropylcellulose, regenerated cellulose, cellulose acetate, cellulose acetate propionate, cellulose acetate butyrate, polyacrylonitrile, polyvinylalcohol, polyethylene, polypropylene, starch, andcyanoethyl branched starch; and/or the filler particles include at least one of inorganic particles, organic particles, and organo-metallic framework materials. When the binder and/or the filler particles in the porous coating 13 include the above components, the reliability of the secondary battery can be improved.

In some embodiments, the porous coating 13 may further include a dispersant, such as carboxymethylcellulose, whereby the viscosity of the slurry of the porous coating 13 may be adjusted to improve the quality and uniformity of the porous coating 13.

In any embodiment of the present application, the viscosity-average molecular weight of the first porous base film 11 is greater than a viscosity-average molecular weight of the second porous base film 12; optionally, the viscosity-average molecular weight of the second porous base film 12 is 100,000 g/mol to 2,000,000 g/mol, and more optionally 300,000 g/mol to 800,000 g/mol.

In some embodiments, the viscosity-average molecular weight of the second porous base film 12 may be 100,000 g/mol, 200,000 g/mol, 300,000 g/mol, 360,000 g/mol, 400,000 g/mol, 500,000 g/mol, 550,000 g/mol, 600,000 g/mol, 800,000 g/mol, 850,000 g/mol, 1,000,000 g/mol, 1,200,000 g/mol, 1,400,000 g/mol, 1,500,000 g/mol, 1,600,000 g/mol, 1,750,000 g/mol, 1,800,000 g/mol, 1,900,000 g/mol, 2,000,000 g/mol, or the like, or a range composed of any two of the above numerical values, and for example, may be 100,000 g/mol to 300,000 g/mol, 360,000 g/mol to 850,000 g/mol, 300,000 g/mol to 800,000 g/mol, 550,000 g/mol to 1,200,000 g/mol, 1,000,000 g/mol to 1,500,000 g/mol, 1,600,000 g/mol to 1,750,000 g/mol, 1,400,000 g/mol to 1,800,000 g/mol, 1,900,000 g/mol to 2,000,000 g/mol, or the like.

When the viscosity-average molecular weight of the second porous base film 12 is within the above range, the stability of the physical properties of the separator can be improved, thereby improving the reliability of the secondary battery.

In any embodiment of the present application, the degree of branching of the first porous base film 11 is less than a degree of branching of the second porous base film 12; optionally, the degree of branching of the second porous base film 12 is less than or equal to 90%, and more optionally less than or equal to 40%.

In some embodiments, the degree of branching of the second porous base film 12 may be 0.1%, 5%, 8%, 10%, 18%, 20%, 30%, 40%, 45%, 50%, 53%, 60%, 70%, 80%, 85%, 90%, or the like, or a range composed of any two of the above numerical values, for example, may be 0.1% to 5%, 5% to 50%, 10% to 20%, 30% to 85%, 53% to 60%, 8% to 70%, 80% to 90%, or the like, or a range less than or equal to the above numerical values, and for example, may be less than or equal to 0.1%, less than or equal to 5%, less than or equal to 8%, less than or equal to 10%, less than or equal to 20%, less than or equal to 30%, less than or equal to 40%, less than or equal to 45%, less than or equal to 50%, less than or equal to 60%, less than or equal to 70%, less than or equal to 80%, less than or equal to 90%, or the like.

When the degree of branching of the second porous base film is within the above range, the stability of the physical properties of the separator can be improved, thereby improving the reliability of the secondary battery.

In any embodiment of the present application, the degree of polymerization of the first porous base film 11 is greater than a degree of polymerization of the second porous base film 12, and the degree of polymerization of the second porous base film 12 is less than or equal to 8000, and optionally 400 to 1000.

In some embodiments, the degree of polymerization of the second porous base film 12 may be 100, 150, 200, 280, 300, 400, 600, 700, 780, 800, 850, 900, 1000, 1500, 1750, 2000, 3000, 5000, 5600, 6000, 6500, 6800, 7000, 7500, 7850, 8000, or the like, or a range composed of any two of the above numerical values, for example, may be 100 to 300, 400 to 900, 600 to 700, 780 to 6800, 400 to 1000, 850 to 1750, 1500 to 6000, 3000 to 5000, 5600 to 6500, 200 to 7000, 2000 to 7500, 7850 to 8000, or the like, or a range less than or equal to the above numerical values, for example, may be less than or equal to 100, less than or equal to 280, less than or equal to 300, less than or equal to 800, less than or equal to 1000, less than or equal to 1500, less than or equal to 3000, less than or equal to 5600, less than or equal to 6000, less than or equal to 7000, less than or equal to 8000, or the like.

When the degree of polymerization of the second porous base film is within the above range, the stability of the physical properties of the separator can be improved, thereby improving the reliability of the secondary battery.

In any embodiment of the present application, a melting point of the first porous base film 11 is lower than a melting point of the second porous base film 12; optionally, the melting point of the second porous base film 12 is 160 °C to 350 °C, and more optionally 170 °C to 320 °C.

In some embodiments, the melting point of the second porous base film 12 may be 160 °C, 170°C, 175 °C, 180 °C, 195 °C, 200 °C, 215 °C, 220 °C, 235 °C, 250 °C, 265 °C, 280 °C, 300 °C, 310 °C, 315 °C, 320 °C, 330 °C, 340 °C, 350 °C, or the like, or a range composed of any two of the above numerical values, and for example, may be 160 °C to 180 °C, 200 °C to 315 °C, 235 °C to 250 °C, 265 °C to 300 °C, 175 °C to 330 °C, 170 °C to 320 °C, 195 °C to 340 °C, 330 °C to 350 °C, or the like.

In any embodiment of the present application, the melting points of the first porous base film 11 and the second porous base film 12 are limited to improve the heat resistance and the puncture strength of the separator, thereby improving the reliability of the secondary battery.

The melting points of the first porous base film 11 and the second porous base film 12 may be measured using equipment and methods known in the art. For example, it can be determined by differential scanning calorimetry. Reference may be made in particular to the standard GB/T 19466.3-2004. As an example, it can be determined according to the following method: 4 mg-6 mg of a sample to be tested is taken and placed in a sample chamber of a differential scanning calorimeter, the sample is heated from 25 °C to 400 °C at a heating rate of 10 °C/min to obtain a melting endothermic curve of the sample, where the temperature corresponding to the peak value of the curve is the melting point of the sample.

In any embodiment of the present application, the crystallinity of the first porous base film 11 is greater than a crystallinity of the second porous base film 12; optionally, the crystallinity of the second porous base film 12 is 20% to 70%, and more optionally 30% to 45%.

In some embodiments, the crystallinity of the second porous base film 12 may be 20%, 28%, 30%, 32%, 35.5%, 40%, 45.2%, 57.5%, 50%, 53%, 56.5%, 60%, 61%, 65%, 68%, 70%, or the like, or a range composed of any two of the above numerical values, and for example, may be 20% to 56.5%, 30% to 40%, 45.2% to 68%, 50% to 60%, 61% to 70%, or the like.

In any embodiment of the present application, the puncture strength of the first porous base film 11 is greater than a puncture strength of the second porous base film 12;
optionally, a ratio of the puncture strength of the first porous base film 11 to the puncture strength of the second porous base film 12 is greater than or equal to 2.5;
optionally, the puncture strength of the second porous base film 12 is greater than or equal to 70 gf, and more optionally 100 gf to 300 gf.

In some embodiments, the ratio of the puncture strength of the first porous base film 11 to the puncture strength of the second porous base film 12 may be 2.5, 2.8, 3.0, 3.252, 3.35, 3.5, 3.85, 4.0, 4.5, 5, or the like, or a range composed of any two of the above numerical values, for example, may be 2.5 to 4.0, 3.0 to 3.35, 2.8 to 3.5, 3.85 to 5, or the like, or a range greater than or equal to the above numerical values, and for example, may be greater than or equal to 2.5, greater than or equal to 3.0, greater than or equal to 3.5, greater than or equal to 4.0, greater than or equal to 4.5, greater than or equal to 5, or the like.

In some embodiments, the puncture strength of the second porous base film 12 may be 70 gf, 80 gf, 100 gf, 150 gf, 170 gf, 195 gf, 200 gf, 227 gf, 250 gf, 300 gf, 332 gf, 350 gf, 400 gf, 450 gf, or the like, or a range composed of any two of the above numerical values, and for example, may be 70 gf to 170 gf, 80 gf to 227 gf, 100 gf to 300 gf, 195 gf to 332 gf, 250 gf to 400 gf, 300 gf to 450 gf, or the like.

In any embodiment of the present application, the second porous base film 12 includes at least one of polyolefin, polytetrafluoroethylene, polyvinyl fluoride, polyethylene terephthalate, polyimide, and polyetheretherketone.

In any embodiment of the present application, the separator satisfies at least one of the following (1) to (4):
(1) a transverse direction elongation at break of the separator is greater than or equal to 80%, optionally greater than or equal to 100%, and more optionally 100% to 300%;
(2) a machine direction elongation at break of the separator is greater than or equal to 40%, optionally greater than or equal to 60%, and more optionally 60% to 200%;
(3) a transverse direction tensile strength of the separator is greater than or equal to 1500 kgf/cm², optionally greater than or equal to 2000 kgf/cm², and more optionally 2000 kgf/cm² to 4000 kgf/cm²; and
(4) a machine direction tensile strength of the separator is greater than or equal to 1500 kgf/cm², optionally greater than or equal to 2000 kgf/cm², and more optionally 2000 kgf/cm² to 4000 kgf/cm².

When the separator satisfies the above range in at least one of (1) to (4), the risk that the separator is punctured by metal dendrites can be reduced, the cycle life of the secondary battery can be prolonged, and the reliability of the secondary battery can be improved.

The air permeability, the transverse direction (MD) tensile strength, the machine direction (TD) tensile strength, the transverse direction elongation at break, and the machine direction elongation at break of the separator all have meanings known in the art and can be measured using methods known in the art. For example, all the tests may be performed with reference to standard GB/T 36363-2018.

The present application provides a method for preparing the separator as described above, which includes:
mixing the polymer powder with lubricating oil, an antioxidant, and a crosslinking agent to obtain a mixture, and melting the mixture to obtain a melt; and
casting and stretching the melt, and extracting the lubricating oil to obtain the first porous base film, the separator including the first porous base film;
where the first porous base film is polyolefin, the viscosity-average molecular weight of the first porous base film is greater than or equal to 1,200,000 g/mol, and the degree of branching of the first porous base film is less than or equal to 5%.

When the method for preparing the separator provided by the present application is adopted, the separator provided by the present application can be prepared, the risk that the separator is punctured by metal dendrites can be reduced, the cycle life of the secondary battery is prolonged, and the reliability of the secondary battery is improved.

In any embodiment of the present application, the preparation method satisfies at least one of the following (1) to (4):
(1) a mass fraction of the polymer powder in the mixture is 5% to 40%, and optionally 20% to 35%;
(2) a mass fraction of the lubricating oil in the mixture is 50% to 90%, and optionally 60% to 75%;
(3) a mass fraction of the antioxidant in the polymer powder is 0.3% to 1.0%, and optionally 0.5% to 1.0%; and
(4) a mass fraction of the crosslinking agent in the polymer powder is 3% to 10%, and optionally 3% to 5%.

When the polymer powder, the lubricating oil, the antioxidant, and the crosslinking agent are within the above ranges, the prepared separator has good puncture strength.

In any embodiment of the present application, the preparation method satisfies at least one of the following (1) to (3):
(1) the polymer powder includes a polyolefin powder; the lubricating oil includes white oil and/or mineral oil; the antioxidant includes at least one of 4,4-thiobis(6-tert-butyl-m-cresol), dibutylhydroxytoluene, phosphite esters, tert-butylhydroquinone, n-octadecyl β-(3,5-di-tert-butyl-4-hydroxyphenyl)propionate, 1,1,3-tris(2-methyl-4-hydroxy-5-tert-butylphenyl)butane, 2-tert-butyl-6-methylphenol, N,N'-di-β-naphthyl-p-phenylenediamine, dilauryl thiodipropionate, tris(nonylphenyl)phosphite, and triphenyl phosphite; the crosslinking agent includes a compound containing at least two unsaturated groups;
(2) the polymer powder has a viscosity-average molecular weight of greater than or equal to 1,200,000 g/mol and a degree of branching of less than or equal to 5%; and
(3) in the step of melting the mixture to obtain the melt, the mixture is mixed and melted within a temperature range of 160 °C to 250 °C, and optionally 190 °C to 230 °C.

When the polymer powder, the lubricating oil, the antioxidant, the crosslinking agent, and the melting temperature are within the above ranges, the prepared separator has good puncture strength.

In some embodiments, the polymer powder includes a polyolefin powder.

In some embodiments, the lubricating oil may include white oil and/or mineral oil. Optionally, the mineral oil may include paraffin oil. Optionally, the mineral oil may include at least one of white oil, paraffin oil, kerosene, and dioctyl phthalate.

In some embodiments, the antioxidant includes at least one of 4,4-thiobis(6-tert-butyl-m-cresol), dibutylhydroxytoluene, phosphite esters, tert-butylhydroquinone, n-octadecyl β-(3,5-di-tert-butyl-4-hydroxyphenyl)propionate, 1,1,3-tris(2-methyl-4-hydroxy-5-tert-butylphenyl)butane, 2-tert-butyl-6-methylphenol, N,N'-di-β-naphthyl-p-phenylenediamine, dilauryl thiodipropionate, tris(nonylphenyl)phosphite, and triphenyl phosphite.

In some embodiments, the crosslinking agent includes a compound containing at least two unsaturated groups. Optionally, the crosslinking agent includes one or several of divinylbenzene, ethylene glycol dimethacrylate (EGDMA), divinyl ether,di(ethylene glycol) divinyl ether, glycerol dimethacrylate, 1,6-hexanediol dimethacrylate, triallyl isocyanate, and trimethylolpropane trimethacrylate.

Optionally, other ingredients may also be included in the mixture, such as plasticizers, extractants, and additives to improve the pore-forming uniformity.

The present application provides specific embodiments of three methods for preparing the separator, which are used for preparing the separator of any embodiment described above.

The first method for preparing the separator includes: selecting a polymer powder with a viscosity-average molecular weight of greater than or equal to 1,200,000 g/mol and a degree of branching of less than or equal to 5%, then adding lubricating oil, an antioxidant, and a crosslinking agent into a mixer according to a certain proportion, and uniformly mixing, where the proportion of the polymer powder in the total mass is 5% to 40%, and optionally 20% to 35%; the proportion of the lubricating oil in the total mass is 50% to 90%, and optionally 60% to 75%; a mass fraction of the antioxidant added in the polymer powder is 0.3% to 1.0%, and optionally 0.5% to 1.0%; and a mass fraction of the crosslinking agent added in the polymer powder is 3% to 10%, and optionally 3% to 5%; and adding the mixture into a double-screw extruder within a temperature range of 160 °C to 250 °C for fully mixing and melting, preparing a cast sheet through a die outlet after forming a homogeneous melt, carrying out transverse direction and machine direction stretching on the cast sheet through roll rolling, and extracting mineral oil through a solvent tank to finally obtain the porous separator.

In some embodiments, in the step of adding the mixture into a double-screw extruder within a temperature range of 160 °C to 250 °C for thorough mixing and melting, the temperature range may be optionally 190 °C to 230 °C.

The second method for preparing the separator includes: providing a first porous base film according to the first preparation method; providing a coating slurry, where the coating slurry includes a binder; and coating at least one surface of the first porous base film with the coating slurry. Optionally, the coating slurry includes both the binder and filler particles.

The third method for preparing the separator includes: providing a first porous base film according to the first preparation method; providing a second porous base film; and laminating the first porous base film and the second porous base film. Optionally, the method further includes a step of providing a coating slurry, where the coating slurry includes a binder, one surface of the first porous base film and/or the second porous base film is coated with the coating slurry, and then the two porous base films are laminated. More optionally, the coating slurry includes the binder and filler particles.

The present application further provides a secondary battery including the separator according to any of the above aspects. When the secondary battery adopts the separator provided by the present application, the reliability of the secondary battery can be improved.

In any embodiment of the present application, the secondary battery further includes a positive electrode plate and a negative electrode plate, the separator is disposed between the positive electrode plate and the negative electrode plate, and the first porous base film 11 faces the negative electrode plate. When the secondary battery adopts the separator provided by the present application, the risk that the separator is punctured by metal dendrites can be reduced, the cycle life of the secondary battery is prolonged, and the reliability of the secondary battery is improved.

### [Positive Electrode Plate]

In the secondary battery, the positive electrode plate generally includes a positive electrode current collector and a positive electrode film layer disposed on the positive electrode current collector, and the positive electrode film layer includes a positive electrode active material.

The positive electrode current collector may be made of a conventional metal foil or be a composite current collector (a metal material may be disposed on a polymer substrate to form a composite current collector). As an example, the positive electrode current collector may be made of aluminum foil.

The specific type of the positive electrode active material is not limited and may include active materials known in the art that can be used for the positive electrode of the secondary battery. Those skilled in the art can select them according to actual needs.

As an example, the positive electrode active material may include, but is not limited to, one or several of a lithium transition metal oxide, lithium-containing phosphate with an olivine structure, and respective modified compounds thereof. Examples of the lithium transition metal oxide may include, but are not limited to, one or several of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate with olivine structure may include, but are not limited to, one or several of lithium iron phosphate, a composite material of lithium iron phosphate and carbon, lithium manganese phosphate, a composite material of lithium manganese phosphate and carbon, lithium iron manganese phosphate, a composite material of lithium iron manganese phosphate and carbon, and respective modified compounds thereof. These materials are all commercially available.

The modified compounds of the materials described above may be in the form of doping modification and/or surface-coating modification of the materials.

Typically, the positive electrode film layer further optionally includes a binder, a conductive agent, and other optional auxiliary agents.

As an example, the conductive agent may be one or several of superconducting carbon, acetylene black, carbon black, Ketjen black, a carbon dot, a carbon nanotube, Ketjen black carbon (Super P, SP), graphene, and a carbon nanofiber.

As an example, the binder may be one or several of polymerized styrene-butadiene rubber (SBR), water-based acrylic resin, polyvinylidene difluoride (PVDF), polytetrafluoroethylene (PTFE), ethylene-vinyl acetate copolymer (EVA), polyacrylic acid (PAA), carboxymethylcellulose (CMC), polyvinyl alcohol (PVA, vinylalcohol polymer), and polyvinyl butyral (PVB).

### [Negative Electrode Plate]

In the secondary battery, the negative electrode plate generally includes a negative electrode current collector and a negative electrode film layer disposed on the negative electrode current collector, and the negative electrode film layer includes a negative electrode active material.

The negative electrode current collector may be made of conventional metal foil or be a composite current collector (for example, a metal material may be disposed on a polymer substrate to form a composite current collector). As an example, the negative electrode current collector may be made of copper foil.

The specific type of the negative electrode active material is not limited and may include active materials known in the art that can be used for the negative electrode of the secondary battery. Those skilled in the art can select them according to actual needs. As an example, the negative electrode active material may include, but is not limited to, one or several of artificial graphite, natural graphite, hard carbon, soft carbon, a silicon-based material, and a tin-based material. The silicon-based material may be selected from one or several of elemental silicon, a silicon-oxygen compound (such as silicon monoxide), a silicon-carbon composite, a silicon-nitrogen composite, and a silicon alloy. The tin-based material may be selected from one or several of elemental tin, tin oxide, and tin alloy. These materials are all commercially available.

In some embodiments, to further improve the energy density of the battery, the negative electrode active material may include a silicon-based material.

Typically, the negative electrode film layer further optionally includes a binder, a conductive agent, and other optional auxiliary agents.

As an example, the conductive agent may be one or several of superconducting carbon, acetylene black, carbon black, Ketjen black, a carbon dot, a carbon nanotube, graphene, and a carbon nanofiber.

As an example, the binder may be one or several of styrene-butadiene rubber (SBR), water-based acrylic resin, polyvinylidene difluoride (PVDF), polytetrafluoroethylene (PTFE), ethylene-vinyl acetate copolymer (EVA), polyvinyl alcohol (PVA), and polyvinyl butyral (PVB).

As an example, other optional auxiliary agents may be thickening agents, dispersants (such as carboxymethylcellulose sodium (CMC-Na)), or PTC thermistor materials.

### [Electrolytic solution]

The secondary battery may include an electrolytic solution that functions to conduct ions between the positive electrode and the negative electrode. The electrolytic solution may include an electrolyte salt and a solvent.

As an example, the electrolyte salt may be selected from one or several of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

As an example, the solvent may be selected from one or several of ethylene carbonate (EC), propylene carbonate (PC), methyl ethyl carbonate (EMC), diethyl carbonate (DEC), dimethyl darbonate (DMC), dipropyl carbonate (DPC), methyl propyl carbonate (MPC), diisopropyl carbonate (EPC), butylene carbonate (BC), fluoroethylene carbonate (FEC), methyl formate (MF), methyl acetate (MA), ethyl acetate (EA), n-Propyl Acetate (PA), methyl propionate (MP), ethyl propanoate (EP), n-propyl propionate (PP), methyl butyrate (MB), ethyl butyrate (EB), 1,4-butyrolactone (GBL), tetramethylene sulfone (SF), methyl sulfone (MSM), methyl ethyl sulfone (EMS), and diethyl sulfone (ESE).

In some embodiments, the electrolytic solution further includes an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, and an additive for improving the low-temperature performance of the battery.

The embodiments of the present application do not particularly limit the shape of the secondary battery, and it may have a cylindrical shape, a prismatic shape, or any other shape. FIG. 4 shows a secondary battery 5 having a prismatic structure as one example.

In some embodiments, the secondary battery may include an outer packaging. The outer packaging is configured for packaging the positive electrode plate, the negative electrode plate, and the electrolyte.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, such as one or several of polypropylene (PP), polybutylene terephthalate (PBT), and polybutylene succinate (PBS).

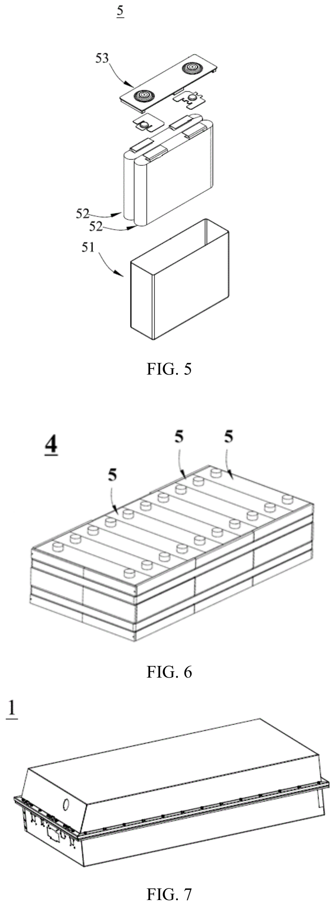

In some embodiments, referring to FIG. 5, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity.

Methods for preparing a secondary battery in the present application are well known. In some embodiments, a positive electrode plate, a separator 10, a negative electrode plate, and an electrolytic solution may be assembled to form a secondary battery. As an example, the positive electrode plate, the separator 10, and the negative electrode plate may form an electrode assembly through a winding process and/or a stacking process. The electrode assembly is placed in an outer packaging, dried, and then injected with an electrolytic solution. After undergoing processes such as vacuum packaging, standing, formation, and shaping, a battery cell is obtained. A plurality of battery cells may be further connected in series or in parallel or in series-parallel to form a battery module. A plurality of battery modules may also be connected in series or in parallel or in series-parallel to form a battery pack. In some embodiments, a plurality of battery cells may also directly constitute a battery pack.

FIG. 6 shows a battery module 4 as one example. Referring to FIG. 6, in the battery module 4, a plurality of secondary batteries 5 may be sequentially disposed in a length direction of the battery module 4. Certainly, the arrangement may also be in any other manner. Further, the plurality of secondary batteries 5 may be fixed by fasteners.

The battery module 4 may further include a shell provided with an accommodating space in which the plurality of secondary batteries 5 are accommodated.

In some embodiments, the above battery module may further be assembled into a battery pack; the number of the battery modules included in the battery pack may be adjusted based on the application and capacity of the battery pack.

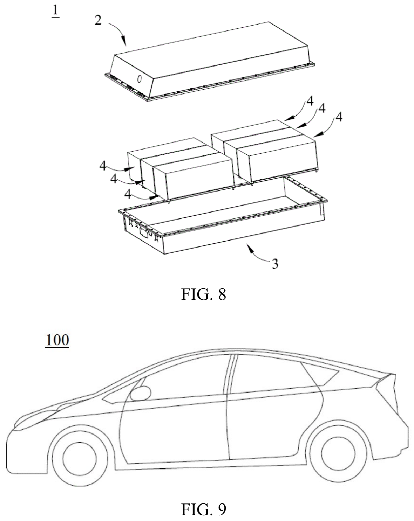

FIG. 7 and FIG. 8 show a battery pack 1 as one example. Referring to FIG. 7 and FIG. 8, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

### [Device]

FIG. 9 shows an electric device as one example. The present application further provides an electric device 100 including the secondary battery provided by the present application. When the secondary battery of the electric device 100 adopts the separator provided by the present application, the reliability of the electric device can be improved.

The battery cell, the battery module, or the battery pack can be used as a power source for the device, and can also be used as an energy storage unit for the device. The device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, and an energy storage system.

A battery cell, a battery module, or a battery pack may be selected based on the use requirements of the device.

The electric device 100 may be a pure electric vehicle, a hybrid electric vehicle, or a plug-in hybrid electric vehicle. To meet the requirements of the electric device for high power and high energy density of the secondary battery, the battery pack or the battery module may be used.

As another example, the electric device 100 may be a mobile phone, a tablet computer, or a notebook computer. The electric device 100 is generally required to be light and thin, and a battery cell can thus be used as the power source.

The following examples are provided to further illustrate the beneficial effects of the present application.

In order to make the technical problems to be addressed, the technical solutions, and the beneficial effects of the embodiments of the present application more apparent, the present application is further described in detail below with reference to the drawings and examples. Apparently, the described embodiments are merely some embodiments of the present application, rather than all of the embodiments. The following description of at least one exemplary example is merely illustrative and is in no way intended to limit the present application and the application thereof. Based on the embodiments in the present application, all other embodiments obtained by those of ordinary skills in the art without creative work shall fall within the protection scope of the present application.

### Preparation of Separator

### The first porous base film serves as a separator:

### (1) Separator 1:

A first porous base film was provided, and the first porous base film satisfied that: the material was polyethylene (PE), the viscosity-average molecular weight was 1,200,000 g/mol, and the degree of branching was 1.6%, where the first porous base film was sample 1 prepared by process 1, and in process 1, the proportion of an antioxidant was 0.3%, the proportion of a crosslinking agent was 8%, and the casting processing temperature was 230 °C.

Separators 2-7 were similar to separator 1, except that: the viscosity-average molecular weight and the degree of branching of the first porous base film were adjusted, the first porous base films of the separators 2-7 respectively adopted samples 2-7 prepared by processes 2-7, and the processes 2-7 were similar to process 1, except that: the proportion of the antioxidant, the proportion of the crosslinking agent, and/or the casting processing temperature were/was adjusted.

The separators 8-9 were similar to that in Example 1, except that: the viscosity-average molecular weight and the degree of branching of the first porous base film were adjusted.

The above-mentioned separators 1-9 were subjected to the relevant performance tests, and the specific results are shown in Table 2.

### Separator with porous coating:

### (1) Separator 10:

A first porous base film was provided, and the first porous base film satisfied that: the material was polyethylene (PE), the viscosity-average molecular weight was 2,300,000 g/mol, and the degree of branching was 1%, where the first porous base film was sample 4 prepared by process 4.

Preparation of a porous coating slurry: polyacrylate serving as a binder, filler alumina particles, and carboxymethylcellulose were uniformly mixed in an appropriate amount of deionized water serving as a solvent at a ratio of 1:4:1 to prepare a porous coating slurry; and the first porous base film was coated with the porous coating slurry to form a porous coating.

(2) Separators 11-12 were similar to separator 10, except that: the viscosity-average molecular weight and the degree of branching of the first porous base film were adjusted, and the first porous base films of the separators 11-12 respectively adopted samples 5-6 prepared by processes 5-6.

(3) Separators 13-14 were similar to separator 10, except that: the viscosity-average molecular weight and the degree of branching of the first porous base film were adjusted.

The relevant performance tests were carried out in the above-mentioned Examples 10-14, and the specific results are shown in Table 3.

Separator formed by compounding a first porous base film and a second porous base film:
(1) Separator 15:
   a first porous base film and a second porous base film were provided;
   the first porous base film satisfied that: the material was polyethylene (PE), the viscosity-average molecular weight was 2,300,000 g/mol, the degree of branching was 1%, and the first porous base film was sample 4 prepared by process 4;
   the second porous base film satisfied that: the material was polypropylene (PP), the viscosity-average molecular weight was 330,000 g/mol, and the degree of branching was 70%.

Preparation of a porous coating slurry: polyacrylate serving as a binder, filler alumina particles, and carboxymethylcellulose were uniformly mixed in an appropriate amount of deionized water serving as a solvent at a ratio of 1:4:1 to prepare a porous coating slurry.

The first porous base film was coated with the porous coating slurry to form a porous coating; and the coated first porous base film and the coated second porous base film were subjected to hot pressing and lamination to obtain the separator, where the porous coating was disposed between the first porous base film and the second porous base film.

(2) Separators 16-19 were similar to separator 15, except that: the material, the viscosity-average molecular weight, and the degree of branching of the second porous base film were adjusted.

(3) Separators 20-21 were similar to separator 15, except that: the viscosity-average molecular weight and/or the degree of branching of the first porous base film and/or the second porous base film were adjusted.

The above-mentioned separators 15-21 were subjected to the relevant performance tests, and the specific results are shown in Table 4.

### II. Preparation of Battery

### Example 1

### 1. Preparation of positive electrode plate

The positive electrode plate was obtained by uniformly mixing LiNi_{0.8}Co_{0.1}Mn_{0.1}O₂ (NCM811) serving as a positive electrode active material, carbon black (Super P) serving as a conductive agent and polyvinylidene difluoride (PVDF) serving as a binder in an appropriate amount of N-methylpyrrolidone (NMP) serving as a solvent at a mass ratio of 96.2:2.7:1.1 to obtain a positive electrode slurry; and coating an aluminum foil serving as a positive electrode current collector with the positive electrode slurry, and performing the procedures such as drying, cold pressing, slitting and cutting.

### (2) Preparation of negative electrode plate

The negative electrode plate was obtained by uniformly mixing artificial graphite serving as a negative electrode active material, carbon black (Super P) serving as a conductive agent, styrene-butadiene rubber (SBR) serving as a binder and carboxymethylcellulose sodium (CMC-Na) in an appropriate amount of deionized water serving as a solvent at a mass ratio of 96.4:0.7:1.8:1.1 to obtain a negative electrode slurry; and coating a copper foil serving as a negative electrode current collector with the negative electrode slurry, and performing the procedures such as drying, cold pressing, slitting and cutting.

### 3. Separator

### The separator 1 prepared as described above was adopted.

### 4. Preparation of electrolytic solution

Ethylene carbonate (EC) and ethyl methyl carbonate (EMC) were mixed according to a mass ratio of 30:70 to obtain an organic solvent. Then, a fully dried electrolyte salt LiPF₆ was dissolved in the mixed solvent, where the concentration of the electrolyte salt was 1.0 mol/L, and the mixture was uniformly mixed to obtain the electrolytic solution.

### 5. Preparation of secondary battery

An electrode assembly was obtained by stacking the positive electrode plate, the separator, and the negative electrode plate in sequence to enable the separator to be disposed between the positive electrode plate and the negative electrode plate to play an isolating role; and then winding. The electrode assembly was placed in an outer packaging, the prepared electrolytic solution was injected into the dried secondary battery, followed by procedures of vacuum packaging, standing, formation, and shaping, and the secondary battery was obtained.

The secondary batteries of Examples 2-15 and Comparative Examples 1-6 were prepared using methods similar to that of Example 1, except that the separators prepared by different processes were used, and the specific results are shown in Tables 1-4.

### III. Battery performance test

### 1. Puncture strength test

The puncture strength of the base film or the separator has the meaning well known in the art and can be measured using equipment and methods known in the art. For example, the puncture strength may be tested in accordance with the standard: GB/T 10004-2008. Specifically, the sample to be tested could be cut into strips, where the width of the strip samples was 100 mm. Test pieces with the width of 100 mm were mounted on a sample film fixing clamp ring, then a steel needle with a diameter of 1.0 mm and a radius of the tip of the diameter of 0.5 mm was used for thrusting the test pieces at a speed of (50±5) mm/min, and the maximum load of the steel needle penetrating the test pieces was read. Usually, 5 parallel test samples were taken simultaneously, 3 points were measured for each test sample, and the arithmetic mean value was taken as the final puncture strength.

### 2. Cycle performance (cycles) of battery

At 25 °C, the secondary batteries prepared in the examples and comparative examples were subjected to constant current charging at a rate of 1C to a charge cut-off voltage V1, followed by constant voltage charging to a current of ≤ 0.05C, left to stand for 5 min, then subjected to constant current discharging at a rate of 0.33C to a discharge cut-off voltage V2, and left to stand for 5 min, which was a charge-discharge cycle. The battery was subjected to a charge-discharge cycle test using this method until the capacity of the battery declined to 80%. The number of cycles at this time was the cycle life of the battery at 25 °C.

**Table 1: List of preparation process parameters for samples of first porous base film**

| Sample No. | Process No. | Process parameters | | |
|---|---|---|---|---|
| | | Proportion of antioxidant | Proportion of crosslinking agent | Casting processing temperature |
| Sample 1 | Process 1 | 0.3% | 8% | 230 °C |
| Sample 2 | Process 2 | 0.3% | 4% | 230 °C |
| Sample 3 | Process 3 | 0.6% | 3% | 235 °C |
| Sample 4 | Process 4 | 0.6% | 3% | 220 °C |
| Sample 5 | Process 5 | 0.8% | 6% | 210 °C |
| Sample 6 | Process 6 | 0.3% | 8% | 220 °C |
| Sample 7 | Process 7 | 0.6% | 3% | 220 °C |

**Table 2: Battery performance test results of Examples 1-7 and Comparative Examples 1-2**

| No. | Separator structure | | | | | Performance Test | |
|---|---|---|---|---|---|---|---|
| | Separator Number | First porous base film | | | | Puncture strength (gf) | Cycle life (cycles) |
| | | Sample No. | Material | Viscosity-average molecular weight in ten thousands (g/mol) | Degree of branching | | |
| Example 1 | Separator 1 | Sample 1 | PE | 120 | 1.6% | 443 | 2361 |
| Example 2 | Separator 2 | Sample 2 | PE | 150 | 1.4% | 461 | 2379 |
| Example 3 | Separator 3 | Sample 3 | PE | 200 | 1.2% | 470 | 2400 |
| Example 4 | Separator 4 | Sample 4 | PE | 230 | 1% | 490 | 2412 |
| Example 5 | Separator 5 | Sample 5 | PE | 260 | 2% | 455 | 2347 |
| Example 6 | Separator 6 | Sample 6 | PE | 300 | 4% | 431 | 2330 |
| Example 7 | Separator 7 | Sample 7 | PE | 320 | 0.8% | 437 | 2341 |
| Comparative Example 1 | Separator 8 | / | PE | 100 | 1% | 412 | 2311 |
| Comparative Example 2 | Separator 9 | / | PE | 230 | 12% | 340 | 2200 |

**Table 3: Battery performance test results of Examples 8-10 and Comparative Examples 3-4**

| No. | Separator structure | | | | | | Performance Test | |
|---|---|---|---|---|---|---|---|---|
| | Separator Number | First porous base film | | | | Porous coating | Puncture strength (gf) | Cycle life (cycles) |
| | | Sample No. | Material | Viscosity-average molecular weight in ten thousands (g/mol) | Degree of branching | | | |
| Example 8 | Separator 10 | Sample 4 | PE | 230 | 1% | Yes | 512 | 2445 |
| Example 9 | Separator 11 | Sample 5 | PE | 260 | 2% | Yes | 492 | 2440 |
| Example 10 | Separator 12 | Sample 6 | PE | 300 | 4% | Yes | 460 | 2360 |
| Comparative Example 3 | Separator 13 | / | PE | 100 | 1% | Yes | 420 | 2349 |
| Comparative Example 4 | Separator 14 | / | PE | 230 | 12% | Yes | 367 | 2245 |

**Table 4: Battery performance test results of Examples 11-18 and Comparative Examples 5-6**

| No. | Separator structure | | | | | | | | | Performance Test | |
|---|---|---|---|---|---|---|---|---|---|---|---|
| | Separator Number | First porous base film | | | | Second porous base film | | | Porous coating | Puncture strength (gf) | Cycle life (cycles) |
| | | Sample No. | Material | Viscosity-average molecular weight in ten thousands (g/mol) | Degree of branching | Material | Viscosity-average molecular weight in ten thousands (g/mol) | Degree of branching | | | |
| Example 11 | Separator 15 | Sample 4 | PE | 230 | 1% | PP | 33 | 70% | Yes | 545 | 2471 |
| Example 12 | Separator 16 | Sample 4 | PE | 230 | 1% | PTFE | 120 | 2% | Yes | 512 | 2455 |
| Example 13 | Separator 17 | Sample 4 | PE | 230 | 1% | PET | 80 | 2% | Yes | 523 | 2462 |
| Example 14 | Separator 18 | Sample 4 | PE | 230 | 1% | PE | 230 | 10% | Yes | 546 | 2489 |
| Example 15 | Separator 19 | Sample 4 | PE | 230 | 1% | PE | 230 | 1% | Yes | 580 | 2550 |
| Comparative Example 5 | Separator 20 | / | PE | 100 | 1% | PP | 33 | 70% | Yes | 450 | 2371 |
| Comparative Example 6 | Separator 21 | / | PE | 230 | 12% | PET | 80 | 2% | Yes | 390 | 2270 |

As can be seen from Tables 2-4, by comparison between Examples 1-7 and Comparative Examples 1-2, Examples 8-10 and Comparative Examples 3-4, and Examples 11-15 and Comparative Examples 5-6, the puncture strength of the battery is enhanced and the cycle life of the battery is prolonged and the reliability of the battery is improved by adopting the separator formed by using the first porous base film as polyolefin, and enabling the viscosity-average molecular weight of the first porous base film to be greater than or equal to 1,200,000 g/mol and the degree of branching of the first porous base film to be less than or equal to 5%.

The above descriptions are only embodiments of the present application, but the protection scope of the present application is not limited thereto. Any variations or substitutions that can be easily conceived by those skilled in the art within the technical scope disclosed in the present application shall fall within the protection scope of the present application. Therefore, the protection scope of the present application shall be subject to the protection scope of the claims.

## Claims

1. A separator, comprising a first porous base film, wherein the first porous base film is polyolefin, a viscosity-average molecular weight of the first porous base film is greater than or equal to 1,200,000 g/mol, and a degree of branching of the first porous base film is less than or equal to 5%.

2. The separator according to claim 1, wherein the viscosity-average molecular weight of the first porous base film is greater than or equal to 1,500,000 g/mol, and optionally 2,000,000 to 3,000,000 g/mol.

3. The separator according to claim 1 or 2, wherein the degree of branching of the first porous base film is less than or equal to 2%, and optionally less than or equal to 1%.

4. The separator according to any one of claims 1 to 3, wherein a degree of polymerization of the first porous base film is greater than or equal to 50,000, and optionally 80,000 to 200,000.

5. The separator according to any one of claims 1 to 4, wherein a crystallinity of the first porous base film is 40% to 90%, and optionally 75% to 85%.

6. The separator according to any one of claims 1 to 5, wherein a puncture strength of the first porous base film is greater than or equal to 300 gf, and optionally 350 gf to 450 gf.

7. The separator according to any one of claims 1 to 6, wherein a thickness of the first porous base film is 1 µm to 12 µm, and optionally 3 µm to 6 µm.

8. The separator according to any one of claims 1 to 7, wherein a porosity of the first porous base film is 20% to 50%, and optionally 30% to 40%.

9. The separator according to any one of claims 1 to 8, wherein an air permeability of the first porous base film is 100 sec/100 cc to 300 sec/100 cc, and optionally 200 sec/100 cc to 300 sec/100 cc.

10. The separator according to any one of claims 1 to 9, wherein a number-average molecular weight of the first porous base film is greater than or equal to 1,400,000, and optionally 1,600,000 to 2,400,000.

11. The separator according to any one of claims 1 to 10, wherein a weight-average molecular weight of the first porous base film is greater than or equal to 1,000,000 g/mol, and optionally 1,200,000 g/mol to 2,000,000 g/mol.

12. The separator according to any one of claims 1 to 11, wherein the separator further comprises a porous coating, the porous coating being disposed on at least one surface of the first porous base film, and the porous coating comprising a binder; optionally, the porous coating comprises a binder and filler particles.

13. The separator according to any one of claims 1 to 11, wherein the separator further comprises a porous coating and a second porous base film, the porous coating being located between the first porous base film and the second porous base film; optionally, the porous coating comprises a binder; more optionally, the porous coating comprises a binder and filler particles.

14. The separator according to claim 12 or 13, wherein the binder comprises at least one of polyacrylate, polyacrylic acid, polytetrafluoroethylene, polyvinylidene fluoride, a vinylidene fluoride-trichloroethylene copolymer, polyvinylpyrrolidone, polyvinyl acetate, an ethylene-vinyl acetate copolymer, polyethylene oxide, polyarylate, carboxymethylcellulose, hydroxypropylcellulose, regenerated cellulose, cellulose acetate, cellulose acetate propionate, cellulose acetate butyrate, polyacrylonitrile, polyvinylalcohol, polyethylene, polypropylene, starch, andcyanoethyl branched starch; and/or
the filler particles comprise at least one of inorganic particles, organic particles, and organo-metallic framework materials.

15. The separator according to claim 13 or 14, wherein the viscosity-average molecular weight of the first porous base film is greater than a viscosity-average molecular weight of the second porous base film; optionally, the viscosity-average molecular weight of the second porous base film is 100,000 g/mol to 2,000,000 g/mol, and more optionally 300,000 g/mol to 800,000 g/mol.

16. The separator according to any one of claims 13 to 15, wherein the degree of branching of the first porous base film is less than a degree of branching of the second porous base film; optionally, the degree of branching of the second porous base film is less than or equal to 90%, and more optionally 10% to 40%.

17. The separator according to any one of claims 13 to 16, wherein the degree of polymerization of the first porous base film is greater than a degree of polymerization of the second porous base film; optionally, the degree of polymerization of the second porous base film is less than or equal to 8000, and more optionally 400 to 1000.

18. The separator according to any one of claims 13 to 17, wherein a melting point of the first porous base film is lower than a melting point of the second porous base film; optionally, the melting point of the second porous base film is 160 °C to 350 °C, and more optionally 170 °C to 320 °C.

19. The separator according to any one of claims 13 to 18, wherein the crystallinity of the first porous base film is greater than a crystallinity of the second porous base film; optionally, the crystallinity of the second porous base film is 20% to 70%, and more optionally 30% to 45%.

20. The separator according to any one of claims 13 to 19, wherein the puncture strength of the first porous base film is greater than a puncture strength of the second porous base film; optionally, a ratio of the puncture strength of the first porous base film to the puncture strength of the second porous base film is greater than or equal to 2.5; optionally, the puncture strength of the second porous base film is greater than or equal to 70 gf, and more optionally 100 gf to 300 gf.

21. The separator according to any one of claims 14 to 20, wherein the second porous base film comprises at least one of polyolefin, polytetrafluoroethylene, polyvinyl fluoride, polyethylene terephthalate, polyimide, and polyetheretherketone.

22. The separator according to any one of claims 1 to 21, wherein the separator satisfies at least one of the following (1) to (4):
(1) a transverse direction elongation at break of the separator is greater than or equal to 80%, optionally greater than or equal to 100%, and more optionally 100% to 300%;
(2) a machine direction elongation at break of the separator is greater than or equal to 40%, optionally greater than or equal to 60%, and more optionally 60% to 200%;
(3) a transverse direction tensile strength of the separator is greater than or equal to 1500 kgf/cm², optionally greater than or equal to 2000 kgf/cm², and more optionally 2000 kgf/cm² to 4000 kgf/cm²; and
(4) a machine direction tensile strength of the separator is greater than or equal to 1500 kgf/cm², optionally greater than or equal to 2000 kgf/cm², and more optionally 2000 kgf/cm² to 4000 kgf/cm².

23. A method for preparing the separator according to any one of claims 1 to 22, comprising:
providing a polymer powder;
mixing the polymer powder with lubricating oil, an antioxidant, and a crosslinking agent to obtain a mixture, and melting the mixture to obtain a melt; and
casting and stretching the melt, and extracting the lubricating oil to obtain the first porous base film;
wherein the first porous base film is polyolefin, the viscosity-average molecular weight of the first porous base film is greater than or equal to 1,200,000 g/mol, and the degree of branching of the first porous base film is less than or equal to 5%.

24. The method for preparing the separator according to claim 23, wherein the preparation method satisfies at least one of the following (1) to (4):
(1) a mass fraction of the polymer powder in the mixture is 5% to 40%, and optionally 20% to 35%;
(2) a mass fraction of the lubricating oil in the mixture is 50% to 90%, and optionally 60% to 75%;
(3) a mass fraction of the antioxidant in the polymer powder is 0.3% to 1.0%, and optionally 0.5% to 1.0%; and
(4) a mass fraction of the crosslinking agent in the polymer powder is 3% to 10%, and optionally 3% to 5%.

25. The method for preparing the separator according to claim 23, wherein the preparation method satisfies at least one of the following (1) to (3):
(1) the polymer powder comprises a polyolefin powder; the lubricating oil comprises white oil and/or mineral oil; the antioxidant comprises at least one of 4,4-thiobis(6-tert-butyl-m-cresol), dibutylhydroxytoluene, phosphite esters, tert-butylhydroquinone, n-octadecyl β-(3,5-di-tert-butyl-4-hydroxyphenyl)propionate, 1,1,3-tris(2-methyl-4-hydroxy-5-tert-butylphenyl)butane, 2-tert-butyl-6-methylphenol, N,N'-di-β-naphthyl-p-phenylenediamine, dilauryl thiodipropionate, tris(nonylphenyl)phosphite, and triphenyl phosphite; the crosslinking agent comprises a compound containing at least two unsaturated groups;
(2) the polymer powder has a viscosity-average molecular weight of greater than or equal to 1,200,000 g/mol and a degree of branching of less than or equal to 5%; and
(3) in the step of melting the mixture to obtain the melt, the mixture is mixed and melted within a temperature range of 160 °C to 250 °C, and optionally 190 °C to 230 °C.

26. A secondary battery, comprising the separator according to any one of claims 1 to 22 or the separator prepared by the method for preparing the separator according to any one of claims 23 to 25.

27. The secondary battery according to claim 26, wherein the secondary battery comprises a positive electrode plate and a negative electrode plate, the separator is disposed between the positive electrode plate and the negative electrode plate, and the first porous base film faces the negative electrode plate.

28. An electric device, comprising the secondary battery according to claim 26 or 27.
